# EUROPEAN PATENT APPLICATION

(11) **EP 1 329 824 A1**
(43) Date of publication of application: **23.07.2003**
(21) Application number: 01922059.9
(22) Date of filing: 24.04.2001
(51) Int. Cl.: G06F 17/60

(54) **COMMODITY CONCEPT DEVELOPING METHOD**

(30) Priority: 26.04.2000 JP 2000126439
(71) Applicant: SHISEIDO COMPANY LIMITED, Chuo-ku, Tokyo 104-8010 (JP)
(72) Inventor: HAYASHI, T., SHISEIDO RES. Ctr. (Shin-Yokohama), Yokohama-Shi, Kanagawa 224-8558 (JP); DOHKAN, Katsuichiro, Machida-Shi, Tokyo 194-0041 (JP)
(74) Representative: Lamb, Martin John Carstairs
(86) International application number: JP0103526
(87) International publication number: WO01082157

(57) **Abstract**

A merchandise concept development method for grasping useful merchandise concepts and further potential needs adaptability of the merchandise is provided. A questionnaire survey for objective merchandise is conducted on a plurality of subjects to collect a plurality of merchandise concepts related to a current product and an ideal merchandise, which are presented based on the free ideas of the subjects. For merchandise concepts common between the subjects, a ratio between number of subjects recognizing them for the ideal merchandise and number of subjects recognizing them for current product is derived. Merchandise concepts having larger ratios are set as a target of merchandise development or merchandise sales. Targeted merchandise concepts situated at the top left side in a figure have low customer satisfaction, among explicit needs, and a value not yet recognized, and those situated on the vertical axis are for new values that do not exist as potential needs.

## Description

### TECHNICAL FIELD

The present invention relates to a merchandise concept development method and more particularly to a merchandise concept development method for grasping a merchandise concept to be targeted in merchandise development and merchandise sales from the result of a survey conducted on a plurality of subjects.

### BACKGROUND ART

In merchandise development, it is long recognized that it is important to change over from a so-called "seeds" deployment idea or a product-out idea, in which predominant technologies of manufacturers (producers) are realized as merchandise quality on the manufacturer(producer)-side, to a so-called "needs" correspondent idea or a market-in idea, in which user-needs are gathered by conducting market research and are taken into account for merchandise quality.

This is similar to a changeover in the field of merchandise sales where a so-called push sales method, in which manufacturers or sellers (selling parties) make the sale of merchandise to the users with superiority of their own brand product technology as a basic leverage as well as other leverages, is changing over to a so-called pull sales method, in which manufacturers offer attractive merchandise that attracts the users by its merchandise quality and further by its merchandise image so that the users spontaneously buy the merchandise.

However, it is not always easy to obtain a concrete achievements in merchandise sales by performing a changeover of ideas in such a manner.

In other words, new merchandise with improved quality that reflects the result of the market research may give a user who sees the merchandise an impression that "It is indeed good merchandise", however, in most cases, it does not induce the user's willingness to buy the merchandise. This is the difficult point in merchandise development and merchandise sales.

In an opinion given for a reason why new merchandise reflecting the result of market research in its quality designing does not induce the user to buy, it is stated that the result of market research only reflects explicit needs of the user for new merchandise and thus a little quality improvement does not give newness or surprise to the user, or, it cannot impress the user (see "Seven Tools for Merchandise Planning - Collection of Tools for New Merchandise Development" written and edited by Noriaki Kanda, Nichikagiren Publisher, 1995).

In the opinion, it is stated that an impression is obtained by multiplying creativity and potential needs adaptivity.

Therein, creativity relates to the above-mentioned product-out method or push sales method and is largely dependent on capabilities such as merchandise development capability and production technology capability. On the other hand, potential needs adaptivity relates to the above-mentioned market-in method or pull sales method and is a factor that can be realized by establishing a precise market research technique.

### DISCLOSURE OF THE INVENTION

Accordingly, it is a general object of the present invention to provide a merchandise concept development method based on the above-mentioned points and for grasping useful merchandise concepts by means of a precise market research technique and further grasping potential needs adaptability of the merchandise.

In order to achieve the above object, a merchandise concept development method according to the present invention is characterized in that the method includes a merchandise concept collecting step in which a survey pertaining to the objective merchandise is conducted on a plurality of subjects to collect a plurality of merchandise concepts for each of a currents product and the ideal merchandise, the merchandise concepts being presented on the basis of free ideas of the subjects; a merchandise concept weighting step in which, for each of the collected plurality of merchandise concepts, deriving a relationship between number of subjects who recognized that the merchandise concept relates to the ideal merchandise and number of subjects who recognized that the merchandise concept relates to the current product and weighting the merchandise concepts based on the derived relationships; and a merchandise concept target specifying step in which the merchandise concept having the larger weighting factor is specified as a target of merchandise development or merchandise sales.

Herein, objective merchandise refers to merchandise that is an object of merchandise concept development. Also, merchandise refers to a concept that is akin to a category having predetermined characteristics whereto groups of merchandise that are manufactured by competing companies or by the same company belong, or in other words, to a concept that is akin to a product line, a product group or a product type having close relationships regarding the similarity of the products, customer hierarchy, sales route and usage. A product refers to a concept akin to groups of merchandise (products) that belong to the above-mentioned merchandise and are manufactured by competing companies or within the same company, or, to a concept akin to articles or individual item in a production line and so on. Commonly, the terms merchandise and product are used in a not clearly distinguishing manner, or, they are distinguished to a certain extent in that merchandise is referred to as what is now in the market and which used to be a product at the hand of the producer, however, for the sake of convenience for describing the present invention, merchandise and product are defined as mentioned above. Also, a current product refers to a product that is actually being manufactured and sold and ideal merchandise refers to an ideal image of the merchandise that the current product belongs to, or, to merchandise having an ideal merchandise concept.

Further, a merchandise concept refers to semantic content of the merchandise and includes both a concept for physical or technical characteristics of the merchandise, or, a goods concept indicating semantic content of merchandise (goods merchandise) for realizing physical functions and an abstract merchandise image of the users (here, subjects or respondents), or, a thing concept indicating semantic content of merchandise (thing merchandise) for realizing individual style of life. The latter merchandise image (thing concept) can be realized by replacing it with physical or technical characteristics of the merchandise and, as a target of merchandise development, can be treated in a substantially similar manner to the concept for the former physical or technical characteristics. The key point of present merchandise development is to provide merchandise that accurately embodies the merchandise image (thing concept) required by the users.

Further, a relationship between the number of subjects who recognized that the merchandise concept relates to the ideal merchandise and number of subjects who recognize that the merchandise concept relates to the current product refers to what can be represented by the ratio or the difference between the two. For example, in a case where the relationship is represented by a ratio, when the ratio for a merchandise concept that is common to the ideal merchandise and the current product is greater than 1, it implies that the relevant merchandise concept is a concept which has a low probability of being realized with the current merchandise among the explicit needs of the subjects (users), and, when the ratio is infinity, or, when the subjects (users) do not recognize it as the merchandise concept of the current product, it implies that the relevant merchandise concept is a concept for a potential needs, or, a new concept for the relevant merchandise.

Further, the merchandise concepts that are obtained on the basis of his/her free ideas in the merchandise concept collecting step and the merchandise concepts to be analyzed in the merchandise concept weighting step refers to the same merchandise concept, in other words, to the same phrase (words) and also to those having common aspects such that the latter can be regarded as a broader concept and the latter is appropriately determined to include the former having a narrower concept.

Also, a survey technique of the present invention is not limited but may be an appropriate method selected from surveys such as a questionnaire survey and an interview survey.

It is to be noted that the meanings of the terms described above are similar for inventions described below and, unless otherwise stated, the description will not be made again.

The present invention is obtained by extending a so-called definition method and embodying it as a merchandise concept development method.

Therefore, according to the present invention, merchandise concepts related to explicit needs of the users that have low probability of being realized with the current merchandise are extracted and further merchandise concepts related to potential needs are grasped, so that these merchandise concepts can be made as targets of merchandise development and merchandise sales to reflect them in a quality design or a sales policy of the merchandise (here, equivalent to a product) and become attractive to the customers.

In this case, if the current product group of the own company does not have merchandise concepts to be targeted or has merchandise concepts that are weak for the current product group of the own company, these merchandise concepts can be of a good use for new product development and product improvement, and on the other hand, if the targeted merchandise concepts are provided in the promotable current product of the company, the advantageous points can be used to further differentiate the merchandise of the own company.

Further, a merchandise concept development method of the present invention is characterized in that the method includes a map and current product name indicator preparation step for preparing a map with two coordinate axes for two pairs of merchandise concepts and a plurality of current product name indicators indicating a plurality of current product names, respectively, each pair of merchandise concepts including merchandise concepts belonging to the same category and opposite to each other, which are labeled at each end of one of the coordinate axes; an individual map collecting step in which a survey is conducted on a plurality of subjects to collect individual maps that are each completed by each subject by positioning the current product name indicator on the map; a general map creating step for creating a general map that is based on the collected individual maps and further showing positions of the current product name indicators over a predetermined probability range in accordance with the number of subjects; and a merchandise concept target setting step in which two merchandise concepts defining a quadrant in which the current product name indicator of a promotable product is positioned in the general map are determined and the two merchandise concepts are set as a target of merchandise development and merchandise sales.

Herein, a pair of merchandise concepts including merchandise concepts belonging to the same category and opposite to each other refers to concepts such as masculine and feminine that are in the same category and form a pair, and, such opposite merchandise concepts are positioned (allocated) on opposing ends of one of the coordinate axes, or, on opposing sides (two quadrants) with respect to the center of one of the coordinate axes so as to prepare a map having two coordinate axes along which two pairs of opposite merchandise concepts are situated. Also, a current product name indicator may be any item by means of which the subject can position the current products on the map and, for example, may be samples or models of the current products or cards with the names of the current products being marked thereon.

The two merchandise concepts obtained by grasping the promotable product from a plurality of current products by carrying out market research and which define a quadrant in which the promotable product is positioned on the two-axis coordinate plane are useful since these are the merchandise concepts realized by the promotable product.

This method is achieved by extending a so-called positioning method and embodying it as a merchandise concept development method.

Therefore, according to the present invention, merchandise concepts related to explicit needs of the users that are recognized for the promotable merchandise are extracted, so that the extracted merchandise concepts can be set as targets of merchandise development and merchandise sales to reflect them to a quality design or a sales policy of the merchandise to become attractive to the customers.

Further, the merchandise concept development method of the present invention is characterized in that the method includes a current product name indicator preparation step for preparing a plurality of current product name indicators indicating a respective plurality of current product names included in objective merchandise; a merchandise concept collecting step in which a survey is conducted on a plurality of subjects to collect a plurality of merchandise concepts obtained during a process of distinguishing the current product name indicator in accordance with the merchandise concepts by means of a cluster analysis method; a current product main merchandise concept weighting and grasping step for weighting the collected plurality of merchandise concepts for each of the current product names by number of subjects who gave the merchandise concept as his/her answer so as to grasp the main merchandise concept; and a merchandise concept target setting step for setting the grasped main merchandise concept of a promotable product as a target of merchandise development or merchandise sales.

This method is achieved by extending a so-called sensitive differential extraction method and embodying it as a merchandise concept development method and, in detail, the following procedures are taken to carry out this method.

A subject selects any three cards from a plurality of cards (current product name indicators) and, on the basis of his/her free idea, the subject separates the three cards into two groups (a group of two cards and a group of one card) having different impressions (i.e., merchandise concepts) while showing which merchandise concepts of the two current product name groups he/she favors. Further, in addition to these three cards, remaining cards are separated into either one of the two groups in a similar manner to the three cards. Then, the subject returns the selected three cards into a collection of a plurality of cards and then again selects any three cards and separates them into two groups, and repeats the selecting and separating procedures until there is no new merchandise concept to be separated into groups.

Then, a plurality of merchandise concepts obtained from a plurality of subjects are analyzed by means of a cluster analysis method. As a result, each current product will have a plurality of merchandise concepts and, for the plurality of merchandise concepts, merchandise concepts can be weighted based on the number of subjects who gave the relevant merchandise concepts as his/her answers. Each current product can be classified (categorized into a plurality of clusters) in accordance with main merchandise concepts having large weighting values, such that a tree map is obtained which comprises a plurality of clusters. In accordance with this analysis method, it can be considered that merchandise concepts having greater weighting factors that are recognized for promotable merchandise have a high usefulness.

Therefore, according to the present invention, merchandise concepts related to explicit needs of the users that are recognized for the promotable merchandise are effectively extracted, so that the extracted merchandise concepts can be made as targets of merchandise development and merchandise sales to reflect them in a quality design or a sales policy of the merchandise and become attractive to the customers.

Also, a merchandise concept development method of the present invention is characterized in that it includes a merchandise concept collecting step in which a survey for objective merchandise is conducted on a plurality of subjects in such a manner that, first, a single merchandise concept is presented based on free ideas of each of the subjects and then a plurality of secondarily presented merchandise concepts that are inspired by associating the merchandise concepts for both merchandise quality and merchandise satisfaction directions so as to collect the plurality of concepts; an association map creating step for creating an association map by analyzing results for a plurality of subjects for the collected plurality of merchandise concepts using a DEMATEL analysis method and spreading the merchandise concepts along a single axis with merchandise quality and merchandise satisfaction on either end; and a merchandise concept target setting step for setting the obtained merchandise concept related to merchandise quality and/or obtained merchandise concept related to merchandise satisfaction as a target of merchandise development or merchandise sales.

Herein, a single merchandise concept is presented at first based on free ideas of each of the subjects is a primary value which is normally intuitively felt by the user, in other words, a value that relates to one's thoughts and first impression. Also, concepts for merchandise quality that are inspired in association with the relevant product concept directly relates to quality design and are inspired by a question asked by a surveyor, such as "How come (Why)?", for the single obtained merchandise concept as a cause in a causal relationship or in a hierarchical association. Whereas, concepts for merchandise satisfaction that are inspired in association with the relevant product concept are ultimate values that the users require for the relevant merchandise and that are inspired by a question asked by a surveyor, such as "What does it in fact mean? What makes you favor this? (How)", for the single obtained merchandise concept as an effect in a causal relationship or in a hierarchical association.

These values may be spread into a high-order hierarchical structure such that potential values that are not previously known for the relevant merchandise are also grasped in addition to the values that are explicit to the relevant merchandise. Also, fundamental quality requirements for the objective merchandise and an ultimate merchandise image required by the subject (user) can also be grasped. It is to be noted that when the order of merchandise concepts answered by the user is reversed in regards to the causal association, a question to be asked by the surveyor may be altered accordingly.

In the above-mentioned example, the surveyor asks biased questions such that the subject inspires merchandise concepts representing how good the objective product is, however, in case where the subject brings up merchandise concepts representing how bad the objective product is, this can of course be used to contribute in setting merchandise concept targets.

This method is achieved by extending a so-called new DEMATEL method or a sentence completion method and embodying it as a merchandise concept development method and, in detail, the following procedures are taken to carry out this method.

Therefore, according to the present invention, merchandise concepts relate to merchandise quality or merchandise concepts relate to merchandise satisfaction can be effectively extracted or grasped by visualizing a logical structure of value recognition of the user, so that the merchandise concepts can be made as targets of merchandise development and merchandise sales to reflect them to a quality design or a sales policy of the merchandise and become attractive to the customers.

Also, a merchandise concept development method of the present invention is characterized in that a targeted merchandise concept is reset based on commonality of the targeted merchandise concepts for merchandise development or merchandise sales that are grasped by a merchandise concept development method as claimed in at least two of the above-described merchandise concept development methods.

Herein, commonality of merchandise concepts refers not only to a case where merchandise concepts are the same but also to a case where merchandise concepts are similar.

If the useful merchandise concepts grasped by different merchandise concept development methods have a commonality, it is determined that the usefulness of the merchandise concepts are even higher. On the contrary, if there is no commonality, the usefulness of the merchandise concepts are reconsidered to avoid any mistakes in determination. Also, when the weighting of the useful merchandise concepts grasped by different merchandise concept development methods are different for each of the merchandise concept development methods, an overall determination of the usefulness of each merchandise concept may be made to set a more precise merchandise concept target.

Therefore, according to the present invention, merchandise concepts having higher usefulness are grasped and these merchandise concepts can be made as targets of merchandise development and merchandise sales to reflect them to a quality design or a sales policy of the merchandise and acquire attractiveness to the customers.

Also, the merchandise concept development method of the present invention is characterized in that the targeted merchandise concepts for merchandise development or merchandise sales are new to the relevant merchandise.

Such new merchandise concepts are related to potential needs of the consumers which are not recognized for current merchandise, and therefore, these new merchandise concepts can be made as targets of merchandise development and merchandise sales to reflect them to a quality design or a sales policy of the merchandise and acquire attractiveness to the customers.

### BRIEF DESCRIPTION OF THE DRAWINGS

Fig. 1 is a diagram showing a format of a questionnaire form used for a merchandise concept development method according to a first example of an embodiment.
Fig. 2 is a chart showing items such as CS coefficient and CS index for each merchandise concept obtained in the merchandise concept development method according to the first example of the embodiment.
Fig. 3 is a scatter graph of each merchandise concept obtained in the merchandise concept development method according to the first example of the embodiment.
Fig. 4 is a scatter graph of each current product obtained in the merchandise concept development method according to a second example of the embodiment.
Fig. 5 is a chart showing weights for merchandise concepts of each cluster and each current product in the clusters obtained in the merchandise concept development method according to a third example of the embodiment.
Fig. 6 is a tree diagram of each cluster obtained in the merchandise concept development method according to the third example of the embodiment.
Fig. 7 is a diagram showing a format of a questionnaire form used in the merchandise concept development method according to a fourth example of the embodiment.
Fig. 8 is a diagram showing associations between merchandise concepts on a single axis in a causal association in accordance with the merchandise concept development method according to the fourth example of the embodiment.

### BEST MODE FOR CARRYING OUT THE INVENTION

In the following, the best mode (hereinafter referred to as an example of the embodiment) of a merchandise concept development method of the present invention will be described with reference to the accompanying drawings.

A merchandise concept development method of a first example of the embodiment will be described below.

The merchandise concept development method of a first example of the embodiment is a method obtained by extending a so-called definition method in which a survey and an analysis are conducted using the following procedure.

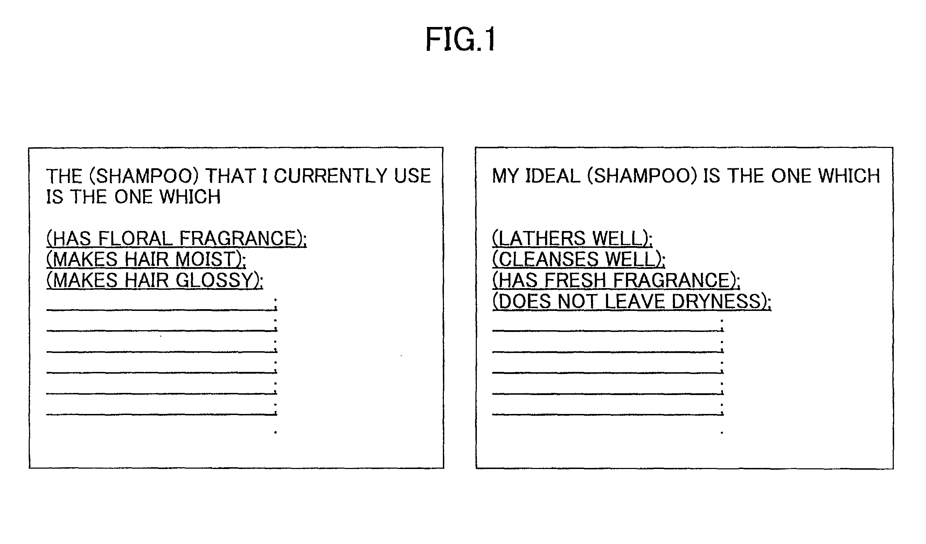

First, a self-administered questionnaire form as shown in Fig. 1 is prepared. At the time the questionnaire form is prepared, there are no words written in the brackets.

Then, at the time it is decided to carry out a questionnaire survey for specific merchandise, a surveyor writes down the word, in this case "shampoo", so as to specify survey objective merchandise. Then, a plurality of people such as the users (consumers) of the relevant objective merchandise or, if required, providers of the objective merchandise are gathered as subjects (answerer) and the plurality of subjects are asked to give answers to the questionnaire. That is to say, the subjects are asked to freely define the shampoo he/she currently uses (current product), or, the subjects are asked to present merchandise concepts. Then, after a short interval, the subjects are asked to define an ideal shampoo (ideal merchandise) in a similar manner in order to present merchandise concepts. In detail, answers such as: the shampoo that I currently use is the one which has floral fragrance and makes hair moist and the ideal shampoo is the one which lathers well and cleanses well (merchandise concept collecting step).

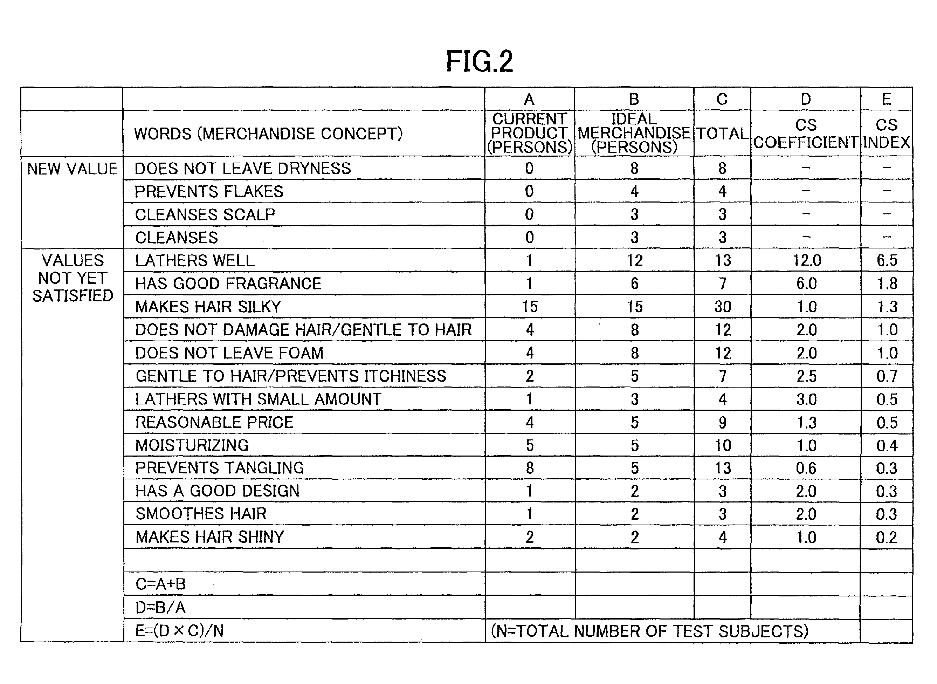

Then, the results of the questionnaire for the plurality of subjects are aggregated. That is to say, a wide variety of defining words obtained based on a free idea of each subject (free word, merchandise concept) are categorized to obtain common and universal merchandise concepts. The common and universal merchandise concepts may be the same as the defining words or may be a superordinate conception of a similar defining word. In detail, for example, the word "moisturized" and the word "moist feeling" are both replaced by the word "makes hair moist" (merchandise concept) which is shown in Fig. 2 and will be described below.

Then, as shown in Fig. 2, for each of the plurality of merchandise concepts obtained by categorizing, the number of subjects who answered for the current product and the number of subjects who answered for the ideal merchandise are summed and indicated in a frequency chart. Further, for each merchandise concept, the frequency of the ideal merchandise is divided by the frequency of the current product to obtain a ratio between them. This ratio is, in this case, referred to as a CS coefficient (customer satisfaction coefficient). The CS coefficient is a value weighted with regards to features of the needs described below for a plurality of merchandise concepts. Further, the CS coefficient is multiplied by the a total number of subjects who answered the relevant merchandise concept for either the ideal merchandise or the current product and the result of multiplication is divided by the total number of subjects so as to universalize the weighting of the relevant merchandise concept among a plurality of merchandise concepts.

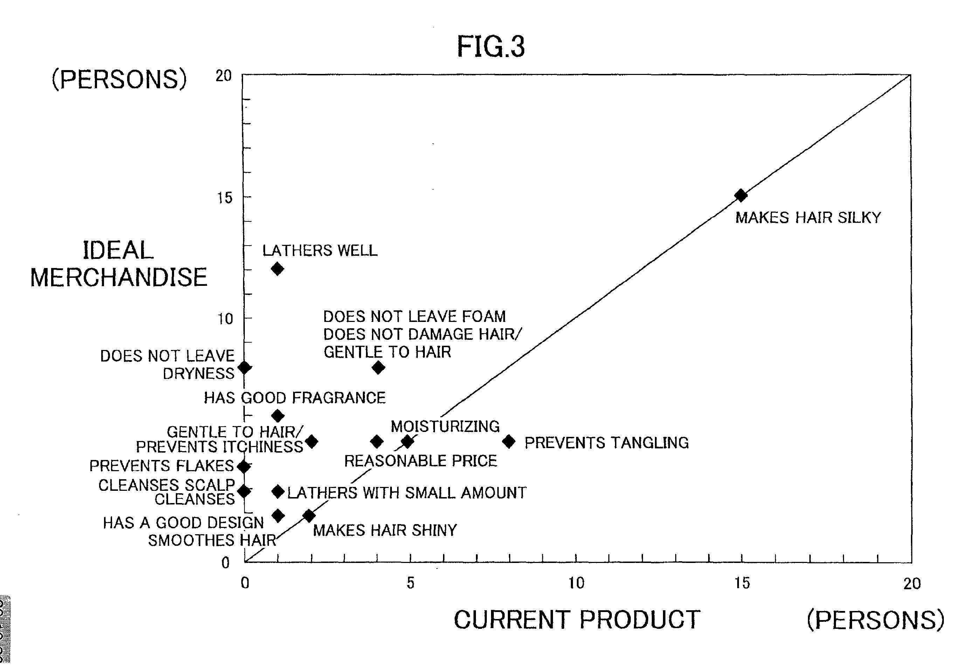

In detail, as shown in Figs. 2 and 3, among twenty-four persons, which is the overall number of subjects, those who answered merchandise concept "does not leave dryness" are zero persons for the current merchandise and eight persons for the ideal merchandise. Then, the sum of the number of subjects who answered the merchandise concept "does not leave dryness" is eight persons (= zero + eight). Therefore, the CS coefficient and the CS index of the merchandise concept of "does not leave dryness" are so to say infinitely large. On the other hand, those who answered the merchandise concept "lathers well" is one person for the current merchandise and twelve persons for the ideal merchandise. Then, the sum of number of subjects who answered the merchandise concept "lathers well" is thirteen persons (= one + twelve). Therefore, the CS coefficient of the merchandise concept "lathers well" is 12.0 (= 12/1) and the CS index is 6.5 (=12.0x13/24). Also, those who answered the merchandise concept "prevents tangling" is eight persons for the current merchandise and five persons for the ideal merchandise. Then, the sum of number of subjects who answered the merchandise concept "prevents tangling" is thirteen persons (= eight + five). Therefore, the CS coefficient of the merchandise concept "prevents tangling" is approximately 0.6 (= 5/8) and the CS index is approximately 0.3 (=0.6x13/24).

Therefore, in Fig. 2, the merchandise concept "does not leave dryness" can be regarded as a new value that the current product does not have, or, the merchandise concept for a potential needs. On the other hand, the merchandise concept "lathers well" can be regarded as one of the explicit needs having a value with low customer satisfaction for the current product, or, the value which is not yet satisfied but has a great customer need. Whereas, the merchandise concept "prevents tangling" can be regarded as one of the explicit needs already having a value with high customer satisfaction for the current product, or, a value that has been satisfied.

Fig. 3 is a scatter graph showing positions for each of the merchandise concepts such that the abscissa indicates number of subjects who answered that the relevant merchandise concept is of the current product and the ordinate indicates number of subjects who answered that the same relevant merchandise concept is of the ideal merchandise. Referring to Fig. 3, positions of the above-mentioned plurality of merchandise concepts can be clearly grasped. Those merchandise concepts that are positioned above a line of gradient 1 are of the values which are not yet satisfied and those merchandise concepts which are positioned below a line of gradient 1 are of the values which have been satisfied and those merchandise concepts which are on the ordinate axis are of new values that the current product does not have.

According to the merchandise concept development method of the first example of the present embodiment, the merchandise concepts that can be regarded as the not yet satisfied values or the new values which the current product does not have are set as targets of merchandise development or merchandise sales (merchandise concept target setting step), so as to reflect them into quality design or sales policy of the merchandise. Thus, merchandise can be created which is attractive to the customer.

A merchandise concept development method according to a second example of the embodiment will be described below.

The merchandise concept development method of the second example of the embodiment is a method in which a so-called positioning method is extended and in which a survey and an analysis are conducted usng the following procedure.

First, items such as cards or models each indicating one of the names of a plurality of product names belonging to the survey objective merchandise (current product name indicator) and a two coordinate axis diagram whereon merchandise concepts are shown on the ends of the two coordinate axes (map) are prepared (current product name indicator preparing step).

Then, after specifying the survey objective merchandise, a survey is conducted in which the subjects are asked to place the items such as the cards each indicating the product name at positions on the two coordinate axis diagram where he/she thinks is appropriate. Preferably, the subjects are asked to relocate the items such as the cards after having placed all the items such as the cards so as to correct the relative relationships between the cards. Such a survey is conducted on a plurality of subjects and completed individual maps for each subject are collected (individual map collecting step).

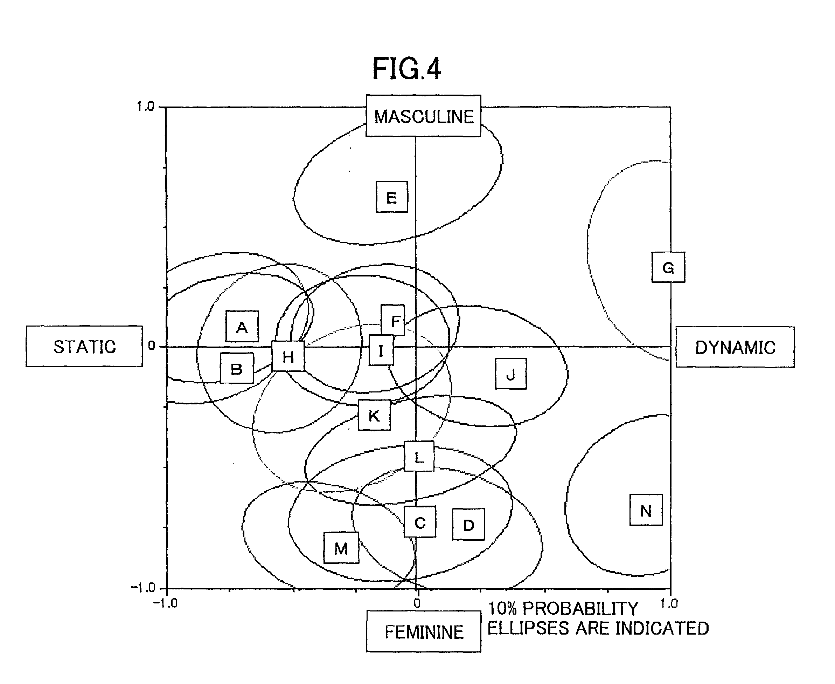

Fig. 4 is a diagram showing the result in which answers obtained from the plurality of subjects are aggregated (general map creating step). In this case, each card carries the current product names "A" through "N", respectively. The merchandise concepts, in this case, those relating to merchandise images, are "dynamic/static" taken along the abscissa and "masculine/feminine" taken along the ordinate. For each merchandise concept, a 10% probability ellipse (predetermined probability range indication) is indicated for the plurality of subjects.

In Fig. 4, for example, "A" and "C" are products of the own company, "B" and "D" are products of other companies and "C" is the promotable merchandise (product) among these products. In this case, since the promotable merchandise "C" has a merchandise concept of a feminine image, it can be seen that, when increasing product items, it is effective to set the merchandise concept of a feminine image as a target (merchandise concept target setting step).

It is to be noted that with respect to the merchandise image of a feminine image, "C" competes with "D" which is a product of the other company and with respect to the merchandise concept of a static image, "C" competes with "B" which is a product of the other company, and this information is useful in the fields such as merchandise development.

According to the merchandise concept development method of the second example of the embodiment, the merchandise concepts that are recognized for the promotable product among explicit needs of the user are effectively extracted and are set as a target of merchandise development or merchandise sales, so as to reflect them into quality design or sales policy of the merchandise (in this case, equivalent to the product). Thus, merchandise can be created which is attractive to the customer.

A merchandise concept development method according to a third example of the embodiment will be described below.

The merchandise concept development method of the third example of the embodiment is a method in which a so-called sensitive differential extraction method is extended and in which a survey and an analysis are conducted using the following procedure.

First, a plurality of cards each indicating one of the names of a plurality of current product names contained in the objective merchandise for each current product (current product name indicator) are prepared (current product name indicator preparing step).

Then, a questionnaire survey is conducted on a plurality of test objects and a plurality of merchandise concepts that are obtained in a procedure of distinguishing the current product name indicator in accordance with the merchandise concepts by means of a cluster analysis method, and survey results are collected (merchandise concept collecting step).

That is to say, a subject selects any three cards from a plurality of cards and, on the basis of his/her free idea, the subject separates the three cards into two groups comprising a group of two cards and a group of one card having different impressions, i.e., merchandise concepts. At the same time, the subject is to show which merchandise concepts of the two current product name groups he/she favors. Then, the subject returns the selected three cards into a collection of a plurality of cards and then selects any three cards and separates them into two groups again, and repeats the selecting and separating procedures until there are no more new merchandise concepts.

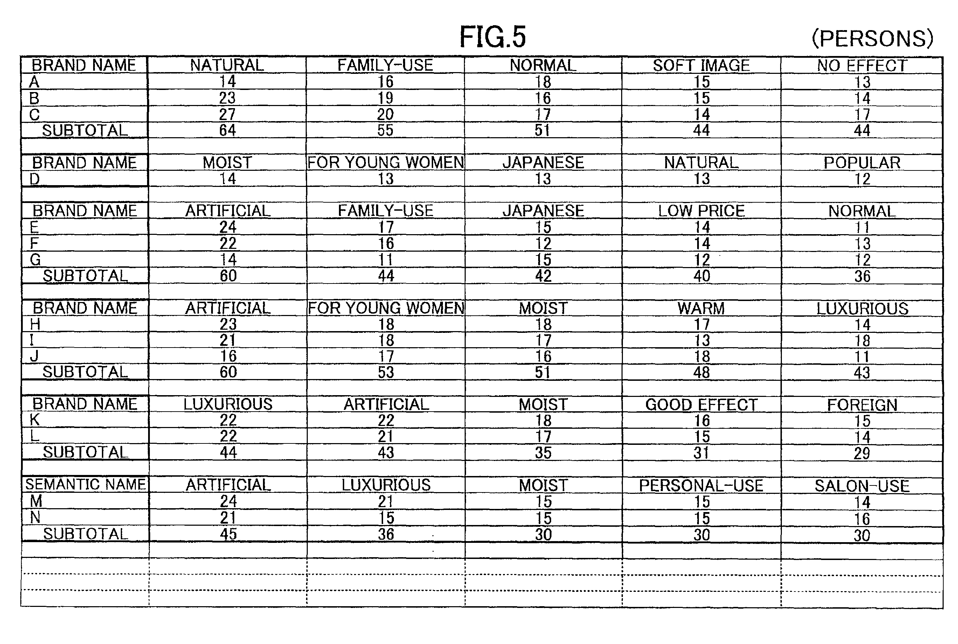

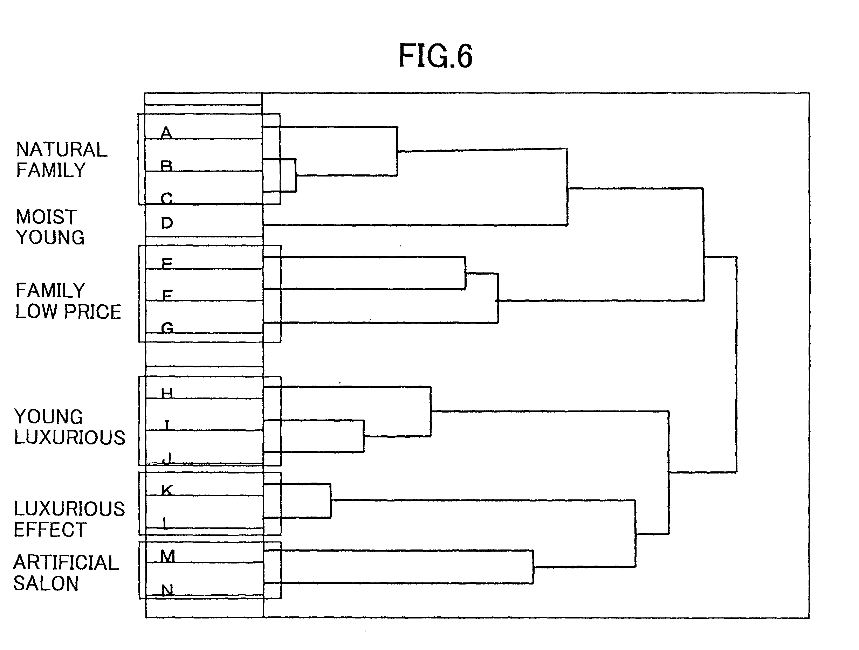

Then, the plurality of merchandise concepts obtained from the plurality of subjects are analyzed by means of a cluster analysis method to obtain a chart shown in Fig. 5 and a tree map shown in Fig. 6.

Referring to the chart of Fig. 5 and to Fig. 6, merchandise concepts are separated into a plurality of clusters from the view point of the difference between the main merchandise concepts, and each current product used for distinguishing the main merchandise concept for the current product is positioned on each cluster.

Each of these current products has a plurality of merchandise concepts including its main merchandise concept. In Fig. 5, for each of the current product, the merchandise concepts are weighted by number of subjects who gave the merchandise concept as his/her answer, so that the main merchandise concepts can be grasped (Fig. 5, current product main merchandise concept weighting and grasping step). It is to be noted that Fig. 5 is a chart in which the five main concepts having greater weighting ratios are shown for each current product. For example, for a survey with the total number of subjects of thirty-two persons, "A", "B" and "C" of the current products are categorized into a single cluster. The current product "D" is categorized in another cluster. When the current products are individually analyzed for the cluster containing the current products "A", "B" and "C", for the current product "A", for example, number of subjects who categorized it as having a merchandise concept "normal" is eighteen persons, which is the largest number, and there are sixteen persons for "family-use" and fifteen persons for "soft image". For the whole cluster containing the current product "A", "B" and "C", the merchandise concept "natural" has the largest number amounting to sixty-four persons and there are fifty five persons for "family-use" and fifty five persons for "normal".

By categorizing each of the current products in accordance with the main merchandise concept having a large weighting ratio, a tree map comprising a plurality of clusters can be obtained (Fig. 6). That is to say, for example, the cluster containing current products "A", "B" and "C" includes a category formed by the merchandise concepts "natural" and "family-use".

Through this analysis method, it can be considered that the merchandise concept having a large weighting ratio that is recognized for promotable merchandise is useful. For example, if the current merchandise "A" is the promotable merchandise, it can be considered that the merchandise concept "normal" is useful and, if a group of the current products "A", "B" and "C" as a whole are the promotable merchandise, it can be considered that the merchandise concept "natural" is useful. Also, for example, when the current product "D" is a product of the own company and the group of current products "A", "B" and "C" are products of a competing other company, the main merchandise concepts for either of them (both clusters) can be compared to grasp a strong point and a weak point of the current product "D". For example, it can be seen that the current product "D" does not have enough merchandise concepts with strong points and is particularly weak regarding the merchandise concepts of "family-use" and "normal" as compared to the current products "A", "B" and "C", which are products of the competing other company, and therefore, these merchandise concepts can be set as a target for merchandise development and so on (merchandise concept target setting step).

Therefore, according to the merchandise concept development method of the third example of the embodiment, the merchandise concepts that are recognized for the promotable product among explicit needs of the user are effectively extracted and are set as a target of merchandise development or merchandise sales, so as to reflect them into quality design or sales policy of the merchandise. Thus, merchandise can be created which is attractive to the customer.

A merchandise concept development method according to a fourth example of the present embodiment will be described below.

The merchandise concept development method of the fourth example of the present embodiment is a method in which a so-called new DEMATEL method or a sentence completion method is extended and in which a survey and an analysis are conducted using the following procedure.

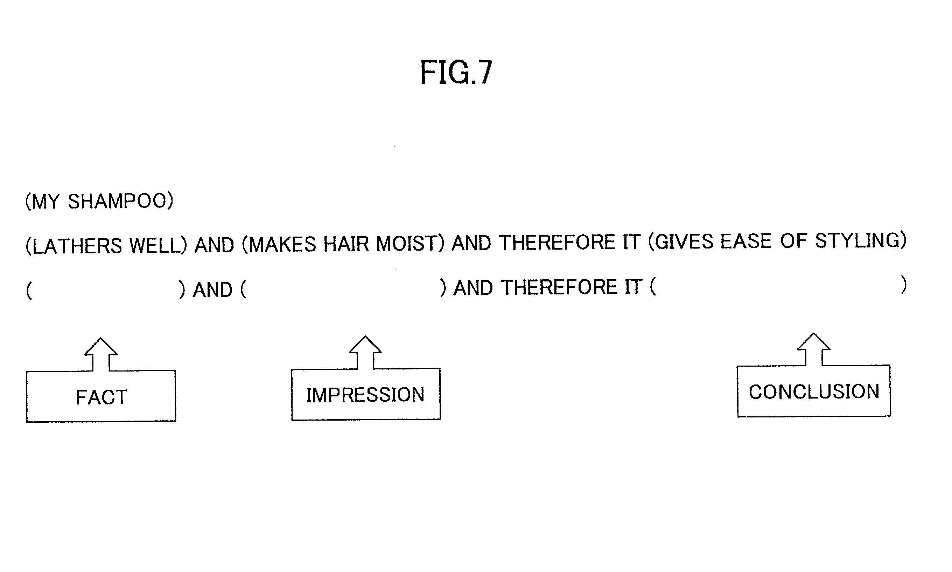

First, a self-administered questionnaire form as shown in Fig. 7 is prepared. In this case, if the surveyor can ask questions and can write down the answers given by the subject, it is not necessary to prepare questionnaire forms. The questionnaire form is provided with a phrase "( )" for specifying the survey objective merchandise and a phrase "( ) and ( ) and therefore it ( )" for expressing the merchandise concept with each bracket being left blank such that a sentence comprising the fact, the impression and the conclusion can be logically completed.

Then, when the survey objective product is determined as, for example, "my shampoo", an interview survey is conducted in which the surveyor conducts an interview with the subject. A questionnaire form with a phrase "My shampoo" being filled in is handed to the subject prior to the interview or a question "What is good about your shampoo?" is asked orally.

The subject gives an answer such as "it makes hair moist." This answer is a first single merchandise concept obtained based on a free idea of the subject about how good the merchandise is, and normally, it is a primary value that the subject (the user) intuitively feels for that product, in other words, a value that relates to one's thoughts and first impression. The answer is to be written on the questionnaire form by the subject or by the surveyor.

Then, the surveyor asks "Why do you think it makes hair moist?", so that the subject gives an answer such as "Because it lathers well." This answer relates to a merchandise concept of "makes hair moist" and is a concept inspired about merchandise quality as a cause in a causal relationship or hierarchically, and therefore directly relates to quality design.

Then, the surveyor asks "What is good when it makes your hair moist?" and the subject gives an answer such as "It gives ease of styling." This relates to a merchandise concept of "makes hair moist" and is a concept inspired about merchandise satisfaction as an effect in a causal relationship or hierarchically, and therefore it can be regarded as an ultimate value that the user requires for the relevant merchandise. These merchandise concepts related to merchandise quality and merchandise satisfaction are grasped not only for those explicitly for the relevant merchandise but also for those that are potentially for but not aware of for the relevant merchandise. That is to say, in Fig. 8, which will be described below, these can be spread in a multilevel structure with both merchandise quality and merchandise satisfaction on a single axis, so that they are considered as those revealing more potential value and needs.

Also, if the first answer obtained for the first question is, for example, "because it lathers well", the content and order of the questions may be altered and a question "What is good if it lathers well?" may be asked.

By carrying out the above-described interview survey, a plurality of subject's words (merchandise concept, free word) are obtained for each subject. The merchandise concepts obtained in this manner are categorized an replaced by a word having commonality (merchandise concept). For example, the word "moist feeling" is to be included in the word "makes hair moist."

Then, for the merchandise concepts having commonality, which are obtained in such a manner, relationships with other merchandise concepts are analyzed by a DEMATEL analyzing method and are structured as shown in Fig. 8 (association map creating step). Fig. 8 is a diagram showing an association map in which the merchandise concepts are spread along a single axis that has merchandise quality and merchandise content on either end. Therein, lines connecting merchandise concepts indicate that these merchandise concepts are in a relationship that is derived in a causal relationship manner.

For example, referring to Fig. 8, it can be visually understood that the merchandise concept "makes hair moist", which relates to an impression and has been described with reference to Fig. 7, is associated with the merchandise concept "lathers well" that is positioned in as a cause in a causal relationship and is associated with merchandise concept "gives ease of styling" that is positioned as an effect in a causal relationship. Also from Fig. 8, it can be seen that, in order for the objective merchandise to have a merchandise concept "gives ease of styling" related to merchandise satisfaction, it is useful to have both the merchandise concept "makes hair moist" and the merchandise concept "manageable" which relates to an impression, and also, in order to have the merchandise concept "manageable", it is useful to have both the merchandise concept "lathers well" and the merchandise concept "prevents roughness."

Therefore, in order to achieve the merchandise concept "gives ease of styling" for the objective merchandise, the merchandise concept "gives ease of styling" is set as a keyword of a sales policy and the features "lathers well" and "does not give roughness" are embodied in the merchandise in merchandise quality designing (merchandise concept target setting step).

It is to be noted that once the merchandise concept "gives ease of styling", which is set as a target, is obtained by the method of the embodiment, this can be reflected in merchandise quality design by spreading this merchandise concept for quality items using other appropriate techniques without using Fig. 8.

According to the merchandise concept development method of the fourth example of the embodiment, a logical structure of value recognition of the user is visualized so as to effectively extract merchandise concepts related to explicit merchandise quality and merchandise concepts related to merchandise satisfaction, or, to grasp merchandise concepts related to potential merchandise quality and merchandise concepts related to merchandise satisfaction, and these merchandise concepts are set as a target of merchandise development or merchandise sales, so as to reflect them into quality design or sales policy of the merchandise (in this case, the same meaning as the product). Thus, merchandise can be created which is attractive to the customer.

The description above relates to the first through fourth merchandise concept development methods related to the embodiment, however, further, the merchandise concept development method of the present invention can be implemented by resetting the targeted merchandise concept based on the commonality between merchandise concepts that are grasped as being a target of merchandise development or merchandise sales in at least two of the above-described merchandise concept development methods. In such a case, the commonality of merchandise concepts includes not only a case where the merchandise concepts are the same but also a case where the merchandise concepts are similar.

When useful merchandise concepts grasped by different merchandise concept development methods have a commonality, it can be determined that the usefulness of that merchandise concept is even higher. For example, for both the first and the fourth examples, the merchandise concept "lathers well" is extracted as being useful, and therefore, it can be determined that the merchandise concept "lathers well" has a highly reliable usefulness. Also, on the contrary, when there is no commonality, the usefulness of the relevant merchandise concept can be reconsidered to avoid mistakes in determinations.

Therefore, by grasping the merchandise concepts having higher usefulness, these merchandise concepts may be set as targets of merchandise development or merchandise sales, so as to reflect them into quality design or sales policy of the merchandise (in this case, the same meaning as the product) and to make them attractive to the user in a more effective manner.

Also, the merchandise concept development method of the present invention can be a method in which a merchandise concept to be targeted for merchandise development and merchandise sales is new to the relevant merchandise.

The new merchandise concept is what is related to potential needs of the consumer that is not recognized for the current merchandise, and by setting such new merchandise concepts as a target of merchandise development or merchandise sales, the merchandise concepts are reflected for quality design or sales policy of the merchandise (in this case, the same meaning as the product), so that attractiveness to the user can be obtained in a more effective manner.

For example, the merchandise concept "does not leave roughness" that is grasped in the first merchandise concept development method of the present embodiment and the merchandise concept "does not leave foam" that is grasped in the first merchandise concept development method of the embodiment can be regarded as new merchandise concepts which are not recognized for the current merchandise.

In addition to the above-described merchandise concept development method, a merchandise concept development method such as the one using a so-called association method can be applied, and in this case, the subject freely provides merchandise concepts that he/she is inspired about regarding the merchandise into the self-administered questionnaire form. Then, the obtained plurality of merchandise concepts are positioned on a map having two coordinate axes such as in the second example in which any view points are taken as coordinate axes, such that merchandise concepts which seemingly have no relationships between them can be combined in an organic manner and useful merchandise concepts can be extracted.

## Claims

1. A merchandise concept development method comprising:
a merchandise concept collecting step in which a survey of an objective merchandise is conducted on a plurality of subjects to collect a plurality of merchandise concepts for each of a current product and an ideal merchandise, said merchandise concepts being presented on the basis of free ideas of the subjects;
a merchandise concept weighting step for each of the collected plurality of merchandise concepts, said weighting step deriving a relationship between a number of subjects who recognize that the merchandise concept relates to the ideal merchandise and number of subjects who recognize that the merchandise concept relates to the current product and weighting the merchandise concepts based on the derived relationships; and
a merchandise concept target specifying step in which the merchandise concept having a larger weighting factor is specified as a target of merchandise development or merchandise sales.

2. A merchandise concept development method comprising:
a map and current product name indicator preparation step for preparing a map with two coordinate axis for two pairs of merchandise concepts and a plurality of current product name indicators indicating a plurality of current product names, respectively, each pair of merchandise concepts belonging to the same category and opposite to each other being labeled at opposing ends of one of said coordinate axes;
an individual map collecting step in which a survey is conducted on a plurality of subjects to collect individual maps that are each completed by each subject by positioning said current product name indicator on said map;
a general map creating step for creating a general map that is based on said collected individual maps and further showing positions of said current product name indicators over a predetermined probability range in accordance with the number of subjects; and
a merchandise concept target setting step in which two merchandise concepts defining a quadrant in which the current product name indicator of a promotable product is positioned in said general map are determined and said two merchandise concepts are set as a target of merchandise development and merchandise sales.

3. A merchandise concept development method comprising:
a current product name indicator preparation step for preparing a plurality of current product name indicators indicating a respective plurality of current product names included in an objective merchandise;
a merchandise concept collecting step in which a survey is conducted on a plurality of subjects to collect a plurality of merchandise concepts obtained during a process of distinguishing the current product name indicator in accordance with the merchandise concepts by means of a cluster analysis method;
a current product main merchandise concept weighting and grasping step for weighting said collected plurality of merchandise concepts for each of said current product names by a number of subjects who gave said merchandise concept as his/her answer so as to grasp the main merchandise concept; and
a merchandise concept target setting step for setting said grasped main merchandise concept of a promotable product as a target of merchandise development or merchandise sales.

4. A merchandise concept development method comprising:
a merchandise concept collecting step in which a survey for an objective merchandise is conducted on a plurality of subjects in such a manner that, first, a single merchandise concept is presented based on free ideas of each of the subjects and then a plurality of secondary merchandise concepts are presented that are inspired by associating said merchandise concepts for both directions of merchandise quality and merchandise satisfaction so as to collect said plurality of concepts;
an association map creating step for creating an association map by analyzing results for a plurality of subjects for said collected plurality of merchandise concepts using a DEMATEL analysis method and spreading the merchandise concepts along a single axis with merchandise quality and merchandise satisfaction on opposing ends; and
a merchandise concept target setting step for setting the obtained merchandise concept related to merchandise quality and/or obtained merchandise concept related to merchandise satisfaction as a target of merchandise development or merchandise sales.

5. A merchandise concept development method wherein a targeted merchandise concept is reset based on commonality of the targeted merchandise concepts for merchandise development or merchandise sales that are grasped by a merchandise concept development method as claimed in at least two of claims 1 through 4.

6. The merchandise concept development method as claimed in claims 1 through 4, wherein the targeted merchandise concepts for merchandise development or merchandise sales are new to the relevant merchandise.
